# EUROPEAN PATENT APPLICATION

(11) **EP 4 276 550 A1**
(43) Date of publication of application: **15.11.2023**
(21) Application number: 22173085.6
(22) Date of filing: 12.05.2022
(51) Int. Cl.: G05B 13/04

(54) **METHOD AND COMPUTER SYSTEM FOR CONTROLLING A PROCESS OF A METALLURGICAL PLANT**

(71) Applicant: Primetals Technologies Austria GmbH, 4031 Linz (AT)
(72) Inventor: Vukovic, Matej, 8020 Graz (AT); Koutroulis, Georgios, 8020 Graz (AT); Krahwinkler, Petra, 4502 St. Marien (AT); Mutlu, Belgin, 8052 Graz (AT); Tauber, Christian, 1030 Wien (AT); Thalmann, Stefan, 8046 Graz (AT)
(74) Representative: Metals@Linz

(57) **Abstract**

The present invention relates to a method and a computer system for controlling a process of a metallurgical plant, wherein at least one process variable of a process of the metallurgical plant is predicted by means of a data driven model (1) for the prediction of the at least one process variable.

The object of the present invention is to provide a method, which explains the result of the data model (1) in a comprehensible, reliable, and transparent manner.

The problem is solved by a first step where input data are verified if the online input data are in a range that was present in the offline process data used for training of the data driven model (1). Furthermore, in a second step, at least one reliability information of the predicted process variable is calculated and compared with a predefined reliability information or transparency information of the at least one predicted process variable is determined.

## Description

### Field of Invention

The present invention relates to a method and a computer system for controlling a process of a metallurgical plant, wherein at least one process variable of a process of the metallurgical plant is predicted by means of a data driven model trained with offline process data of the metallurgical plant, wherein online input data, collected during operation, being inputted into the data driven model for the prediction of the at least one process variable. The process variable is used for controlling the process of the metallurgical plant.

### Background

Data analytics methods for the prediction of process variables tend to be black box models. Hence the reason why a certain prediction was made and how reliable this prediction is, is usually unknown. This limits the applicability of the predictions in particular in critical control systems. These black boxes can be made more transparent if the models are combined with an explanation of the model's behaviour and/or the model's internal functionality and also including reliability/validity indicators. These methods shall be integrated into controlled plants and expert systems to help an operator to understand why a data analytics model predicts or forecasts a certain value, to show the models certainty about the outcome and thereby to make the model approach more transparent.

There is no direct or simple method to avoid such a black box character.

There are numerous data analytics methods and a lot of models have been developed and trained to predict process variables. The integration of such models into a running plant - deployment - usually requires some adaptations of the model since they are typically developed with offline data. However, to use such a model for controlling a plant, a second step is necessary. In this second step, it must be ensured, that the result is reliable and valid. Furthermore, it needs to be comprehensible, explainable, and accountable why a certain prediction was made by the model.

### Summary

The object of the present invention is to provide a method, which explains the result of the data model in a comprehensible, reliable, and transparent manner.

In a first step input data are verified if the online input data are in a range that was present in the offline process data used for training of the data driven model. If the online input data is represented by the offline process data, the input data will be forwarded to the data driven model, otherwise a warning message will be outputted, and the input data will only be forwarded to the data driven model if an operator or control system allows it to be forwarded.

In a second step, at least one reliability information of the predicted process variable is calculated and compared with a predefined reliability information and / or transparency information of the at least one predicted process variable is determined. The transparency information is used to comprehend a result of the predicted process variable and to check the reliability of the predicted process variable. The transparency information is compared with a predefined transparency information. The transparency information is determined in such a manner that it is comparable to an empirical value, empirical information and/or empirical data of the process of the metallurgical plant.

If the comparisons, performed in the second step, classify the at least one process variable as reliable, the process variable is used as input variable into a control system of the metallurgical plant, otherwise the control system decides how to proceed based on predefined rules.

In most cases, the process variable is difficult to measure or can only be measured after a lengthy measurement evaluation, e.g. measurement in a laboratory. An example of such a process variable is the hot metal temperature in a blast furnace or the hot metal silicon content in a blast furnace.

In the case that the predicted process variable is classified as not reliable, the control system has predefined rules how to proceed. Such predefined rules are for example to use a physical model-based backup system. The predefined rules are depending on the process of the metallurgical plant. If the uncertainty of the prediction is high, but an upper and lower bound of the confidence interval still has the same trend - process variable falling or rising - this trend information could still be used by the control system.

Another possibility would be to consider predictions for different time horizons: e.g. the 2 hour prediction is not reliable but the 1 hour prediction is reliable. So, the 1 hour prediction is used.

Still another possibility would be to take the transparency information into account and follow some rule depending on the transparency information.

A "Before Prediction" part in the first step ensures that the online input data is in a range that was represented by the offline process data used for the training of the data driven model, so that it is known to the model. If the online input data is outside the known range, the model has not learned anything about the data in the training step and the results are therefore not very reliable. For example, if the offline input data only comes from a time period, where no steam was added to the blast and now steam is added to the blast, then the input data is outside the offline input data range. The data driven model has not had the possibility to learn anything about the effects of steam addition onto the process and the target variable. This furthermore provides a safety mechanism for detection of a drift in the data which can indicate the necessity for model adjustments to account for changes in the data. One of the fundamental assumptions in deployment of any data driven model is that the data previously used in model development are an actual and reliable representation of the real-world data. Any deviations from this assumption implies that the model is making prediction on unseen data which significantly reduces performance and makes results unreliable. In such a case the predicted process variable will not be used for controlling the process of the metallurgical plant. The control system decides how to proceed. The control system can decide to forward the data to the data driven model to get a prediction of the process variable, but this prediction is not used as input of the control system. This prediction can be used for further evaluation.

In production processes of metallurgical plants, deviations in the data can occur due to a large variety of reasons such as: deterioration or recalibration of manufacturing equipment, faulty sensors, testing new operation modes etc. These statistical deviations are commonly referred to as concept drift. To increase the reliability of the deployed model in production processes, concept drift detection methods are applied before data is fed into the data driven model. In our case for example Maximum Mean Discrepancy method, which provides a measure of similarity between datasets, is applied for detection of drift in the input data. Once concept drift is detected, a prediction is not made as the output of the model is unreliable. If the frequency and the magnitude of the positive detection of concept drift increases, further steps need to be made such as: investigating the reasons for concept drift, simple model retraining with the additional data or the whole model development process must be initiated. With these methods it is ensured that the input to the model is within ranges that it has been developed on, which finally ensures reliability of the predictions.

In the second step the reliability information and / or transparency information is determined. The transparency information is an explanation of the model prediction and additional measures to establish model certainty. The transparency information serves to ensure that the process variable of the data driven model is comprehensible based on known information about the production process of the metallurgical plant. This may be a list of the input variables that have most influence on the model result. More specifically, these methods lead to model simplification by providing operators or control systems with a set of simplified interpretable rules that, when applied, result in the same prediction, thus providing insight into inner works of the model and a basis for model decision-making of the reliability of the predicted process variable. Additionally, these methods can also be a counterfactual explanation. These give an information about which input parameters need to be changed and in what way to achieve the desired goal.

The second step consists of one or more approaches, to make the predictions of the model understandable and comparable with existing empirical values or empirical data and thereby increasing understanding and trust of the plant operators and control systems. This can be methods, that extract the influencing variables for the result, confidence intervals, counterfactuals, anchors or others. The information determined in the second step makes it possible to evaluate, based on existing empirical values, whether the result is comprehensible or whether there is a possible error, for example in the input data.

A control system can use the transparency information, determined in the second step, and decide if the outputted process parameter is reliable and if the predicted process variable is reliable enough for using this parameter for further process operations of the metallurgical plant.

Without the information of the second step, the control system has no basis for decision - making, whether the outputted process parameter is reliable or not. The first and second step makes it possible to make the outputted process parameter transparent and / or reliable. In the case that, based on the transparency information and existing empirical values, the outputted process parameter does not seem reliable it is possible to react quickly and find a possible error at the input parameters or the data driven model. For example, if the result is unreliable and due to the most influencing input variables, a problem of the measurement can be detected. Either the measurement has an error, or the model has a problem - because possibly there were erroneous measurements in the training data. In this case, the data model must be retrained, excluding the erroneous training data.

The reliability information is compared with predefined reliability information and /or the transparency information compared with a predefined transparency information range, and if so, the process variable is used for controlling the metallurgical plant. If the performed comparisons classify the predicted process variable as reliable the process variable is used as input variable for the control system.

The predefined transparency information range will be generated with existing empirical values. An example for a predefined transparency information is to compare the most influential input variables of the current prediction to the most influential variables of the training. If they are similar, it could be considered as reliable.

The counterfactuals can also be determined during the training phase and assigned to specific trainings data.

If the counterfactuals, determined for the online input data and comparable with specific offline data from the trainings phase, are the same ones as determined in the training phase, then the result is reliable.

If the variables used by the anchors are of a set of variables determined e.g. by the training step, then the control system considers it reliable.

In a control system where trust information is used, the trust of the most influential variables could be checked and the result is reliable, if the most influential variables are also reliable. Trust is a degree of confidence one grants/concedes to an information providing resource. If a data source - e.g. a temperature sensor - and considering the type of sensor and the environment it works in, a trust value can be assigned to it, which basically reflects how confident it is that the sensor output the correct value. When the data from the data source with a certain trust value is used in a processing system to calculate a new value, the importance of that data for the new value can also be defined. Using these values, a trust value for the newly calculated value can be derived. With several sequential calculations like this, trust is propagated in the system. E.g., a new thermocouple in a moderate environment will have a higher trust value than an old thermocouple in a rough - e.g., hot - environment as thermocouples are known to drift with increasing age and maximum exposure temperature.

Some other statistical checks could be performed on the most influential variables to determine the reliability of the process variable.

Similar process states to the most influential variables could be searched and used for evaluation of the process variable reliability.

In an advantageous embodiment the data driven model is designed that the process parameter is predicted by a regression analysis. The predicted process parameter is outputted by the data driven model as an exact value. The predicted process parameter is comparable to a measured value and is used as a substitute for a measurement, e.g., for process parameters that cannot be measured in a simple way, such as the hot metal temperature in the blast furnace or for predicting process parameters one hour in advance.

In a further advantageous embodiment, the data driven model is developed using a method for Cross Industry standard for Data Mining, which consists of the steps:
- Business Understanding
- Data Understanding
- Data Preparation
- Modeling
- Evaluation
- Deployment,
wherein the first step is introduced before the Deployment step and the second step is introduced after the deployment step.

Cross Industry Standard Process for Data Mining (CRISP-DM) is the most widely used analytical model and de facto industry standard for development of data driven solutions. For the data driven model itself there are a lot of possible choices: deep learning networks (e.g. CNN, LSTM, ...), neural networks (MLPP,...), (Least Squares) support vector machines, gradient boosted trees/regressors (XGBoost,...), random forests, autoregression (ARIMA, ARIMAX, VARMA,...), ensembles of different regressors.

In another advantageous embodiment the data driven model is designed in such a way that it can predict the process variable for at least 1 minute in advance, preferably at least 1 hour in advance particular preferably at least 2 hours in advance. In metallurgical plant like a blast furnace or a direct reduction plant the control system should have the process information in advance to be able to counteract an undesired process flow. It takes some time for such processes to influence the process variables.

In another advantageous embodiment the offline process data and the online input data contains at least one of the following data sets:
- material input data
- sensor data from the metallurgical plant
- analysis data from output material
- data from an output event
- calculated data of the metallurgical plant.

The material input data is for example Materials with their amounts and chemistry charged to the blast furnace. E.g., 1412 kg Pellets with brandcode ABC containing 3,85% Moisture 66.9% Fe, 3.28% SiO2, 0.33% Al2O3, 0.15% MgO, etc.

The sensor data from the metallurgical plant is for Pressure measurements along the furnace shaft, top gas analysis measurements, blast flow measurements

The analysis data from output data is for example hot metal of a blast furnace with 93,4% Fe, 0.363% Si, 0.599% Mn, etc and / or Slag with 37.88% SiO2, 36.95% CaO, 8.8% Al2O3, Basicity B2: 0.975, etc....

The data from an output event is for example hot metal temperature of a metallurgic furnace, casting speed of a casting plant and / or hot metal weight of a metallurgical furnace.

The calculated data of the metallurgical plant is for example Heat fluxes along the shaft, pressure differences, solution loss carbon and / or indirect Reduction.

The heat fluxes along the shaft are calculated from input and output water temperatures and a water flow of staves. The solution loss carbon is calculated from fuel rate, hot metal rate, hot metal analysis, top gas analysis, blast flow, oxygen addition and blast moisture. The indirect Reduction is calculated from top gas flow, top gas analysis and the bosh gas, which in turn is calculated from the blast including all injectants.

In another advantageous embodiment the reliability information is a confidence interval, and the transparency information is determined by anchors and/or a list of most influencing variables on the predicted process variable and/or counterfactual explanations.

Counterfactuals and Anchors are applied as an additional explainable Artificial Intelligence method for meta information extraction from the predictive data driven model. These two methods are diametrically opposed as Counterfactuals are focusing on the reasoning about which changes in the data should be made so that the model predicts a different class or value, and Anchors method is focused on reducing the model complexity and extraction of simple rules for reasoning on why the model predicted the class.

The confidence interval will be determined for example by the Model Agnostic Prediction Interval Estimator (MAPIE). Confidence interval calculated with this method encompass both aleatoric and epistemic uncertainties. Approach is based on Jackknife+ method which obtains theoretically guaranteed prediction intervals. In time-restrictive environments, due to computational intensity, variations of this method, such as Jackknife+-after-bootstrap method, can be used to obtain slightly larger confidence intervals. In its essence, Jackknife+ method calculates the leave-one-out residual from the regression functions previously fit on each data instance from the training set except one. Finally, leave-one-out prediction is used on the new test point to take variability of the regression function into account.

Counterfactuals is the method with the background in causal inference and comes as very natural for humans, i.e., reflecting on what could have been done differently to achieve different results. Following the same thought, Counterfactual methods have the task of finding a data sample that is related to the input data sample but is leading to a different prediction. Current state of the art methods for extraction of counterfactual instances are Counterfactual Explanations, Counterfactuals Guided by Prototypes and Counterfactuals with Reinforcement Learning. The advantageous approach of the present invention follows the Counterfactual Explanations method which has two requirements: To find similar production data sample so that predicted process variable trend is different than the current one and the difference between the current and the new production data sample should be human-interpretable. This approach consists of three components. The process engineer is presented with the current production data, the prediction of the hot metal temperature trend, and the difference from the current production data that cause the model to predict the opposite hot metal temperature trend. This additional meta information about the model behaviour supports the process operator in deciding on whether to take the predictions into account.

On the other hand, Anchors present a method for model simplification. In essence anchors present locally sufficient, high-precision rules that explain the behaviour of complex models and ensure that these rules lead to a prediction with a high degree of confidence. In addition to counterfactuals, upon prediction, several if-then rules (anchors) are extracted and presented to the applicant of the model. These anchors present a small subset of e.g., three to five rules that, with certain confidence, guarantee the same prediction even without the other values of the dataset. Implementation of these three methods provides the process operators with decision support meta information.

Counterfactuals reflecting on, i.e., what could have been done differently to achieve different results - e.g., increased blast flow would have been resulted in a reduced hot metal temperature).

A list of the most influencing variables enables you to understand the input which is responsible for the model result. For example, if the model uses the ambient temperature to forecast the hot metal temperature an operator should be cautious.

This additional information (rules) enables to decide if the model result can be trusted.

In an advantageous embodiment the metallurgical plant is a blast furnace and the process variable is at least a hot metal temperature and/or a hot metal silicon content.

Preferably the metallurgical plant is an iron direct reduction plant, or an iron smelting reduction plant is, and the process variable is at least one of a hot metal temperature, metallization, carbon content, iron content or Fe2O3 content. The iron direct reduction plant is for example a Hydrogen-Based Fine-Ore Reduction (HYFOR^{®}) plant. The smelting reduction plants are for example a FINEX^{®} or COREX^{®} plant.

In a further advantageous embodiment, the metallurgical plan is a sinter or pellet plant, and the process variable is at least a harmonic diameter, a grainsize, a tumbler index, a reduction-degradation index (RDI) or a mechanical strength.

In still another advantageous embodiment, the metallurgical plant is a steel plant, preferably a blast oxygen furnace, argon oxygen decarburization furnace, Electric arc furnace or Ladle furnace - and the process variable is at least a temperature, a steel analysis, - preferably C, Si, Mn, P and / or S content, or a slag analysis, preferably FeTot, FeO, Fe2O3, CaO, SiO2 and/or MgO content.

The object of the invention is solved by a computer system.

The computer system consists of the memory where a first computer program is stored, which is programmed in such a way, to verifies in a first step if online input data is in a range that was present in the offline process data used for training of the data driven model and if the online input data is present in the offline process data, which is stored on the memory. The input data will be forwarded as input data to the data driven model, otherwise a warning message and possibly a verification result will be outputted to a verification output port.

The memory further includes a second computer program which is programmed in such a way:
- to calculate at least one reliability information of the predicted process variable and compared with a predefined reliability information
- and / or a transparency information of the at least one predicted process variable is determined, the transparency information is used to comprehend a result of the predicted variable to check a reliability of the predicted process variable, wherein the transparency information is compared with a predefined transparency information,
- wherein the transparency information is determined in such a manner that it is comparable to an empirical value, empirical information and/or empirical data of the process of the metallurgical plant

The second computer program is also programmed to classify, according to the comparisons carried out, if the process variable is reliable, if the process variable is classified as reliable the process variable is outputted to the output port. Otherwise, a warning message is generated and outputted to the output port.

In an advantageous embodiment the data driven model is programmed that the process parameter is predicted by a regression analysis.

Preferably, the data driven model is programmed in such a way that it can predict the process variable for at least 1 minute in advance, preferably at least 1 hour in advance, particular preferably 2 hours.

The object of the invention is solved by a Blast furnace comprising the above-described computer system, wherein the process variable is at least a hot metal temperature and/or a hot metal silicon content

The object of the invention is solved by a Steel making plant, preferably a steelmaking converter plant, electric arc furnace or a ladle furnace comprising the above- described computer system, wherein the process variable is at least one of a hot metal temperature, a steel analysis and / or a slag analysis.

### Brief Description of Drawings

Fig. 1 is a schematic diagram of the control system of a blast furnace
Figure 2 shows a sketch of the Cross Industry Standard Process for Data Mining
Figure 3 and 4 depicts a prediction result for the hot metal temperature of a blast furnace.
Fig. 5 shows a two-phase approach do determine counterfactual information as transparency information

### Specific Description

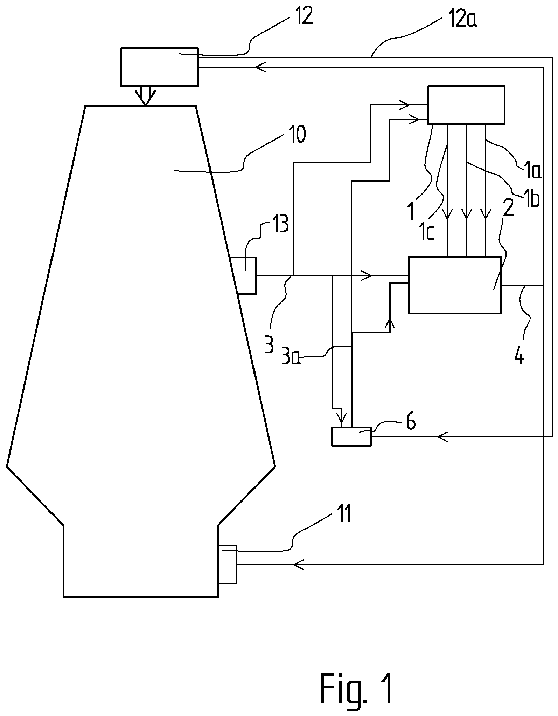

Fig. 1 shows a schematic diagram of the control system of a blast furnace 10.

The data driven model 1, which was trained with offline process data of the blast furnace. The data driven model 1 receives online input data 3 from measurement devices 13 which measures process parameters of the blast furnace 10. The data driven model 1 also receives online input data 3a from a calculation device 6, which receives material data 12a from a material input device 12 and also the input data 3. This calculation device 6 can calculate, based on the input data 3 and the material input data 12a further necessary input parameter for the data driven model 1. The data driven model predict based on the online input data 3, 3a a process variable 1a, for example a hot metal temperature and the silicon content of the hot metal. The process variable 1a is an input into the control system 2 of the blast furnace 10. Additionally, the data driven model 1 transmit to the control system 2 a reliable information 1b and/or transparency information 1c. If the reliable information 1b and/or the transparency information 1c classifies the predicted process variable 1a as reliable the control system 2 use the predicted process variable 1a for controlling the blast furnace. The control system also receives the input data 3, 3a. The control system outputs 4 are connected with different actuators 11 and the material input device 12 for controlling the blast furnace.

The control system 2 can be an existing one, which is supplemented by the data driven model 1 according to the invention.

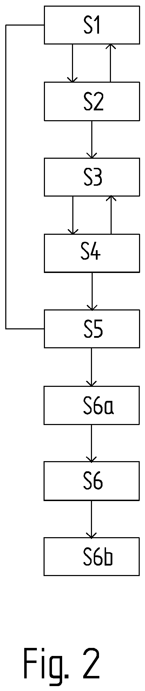

In Fig. 2 shows a sketch of the Cross Industry Standard Process for Data Mining (CRISP-DM) including a first step (Before Prediction) S6a and a second step (After Prediction) S6b. The known CRISP-DM consists of the steps Business Understanding S1, Data Understanding S2, Data Preparation S3, Modelling S4, Evaluation S5 and Deployment S6.

After S1-S5 causal discovery and global explanation artificial intelligent methods are applied on the data and the model for extraction of causal information and explaining the interaction of most important features (characteristics). Succeeding is the Evaluation phase where additional quality measures are developed and employed. These quality measures are provided to domain experts and used for comparing the performance of different models and finding an acceptable compromise. For example, models that more accurately forecast the final condition of the metallurgical plant, compared to models that predict a more accurate trend of the metallurgical plant status.

Once an acceptable model has been selected, Evaluation phase S5 is followed by Before Prediction phase S6a. In this phase input data monitoring techniques are applied to incoming data, to make sure that input data is within the training data ranges that the model has been trained on for the Deployment phase S6. If the input data have been verified, the model can make a prediction that is then decomposed through explainable artificial intelligent methods to provide the reasoning behind the prediction in the final stage S6b.

The first step S6a makes sure, that the input data lies in a range, that was present in the training data such that it is known to the model.

The second step S6b gives some explanation of the model perdition, for example a counterfactual explanation. In the case that the metallurgical plant is a blast furnace you get the information that in the current state you would be able to reach a target hot metal temperature of 1500°C if you increase variable A by a first amount and decrease variable B by a second certain amount.

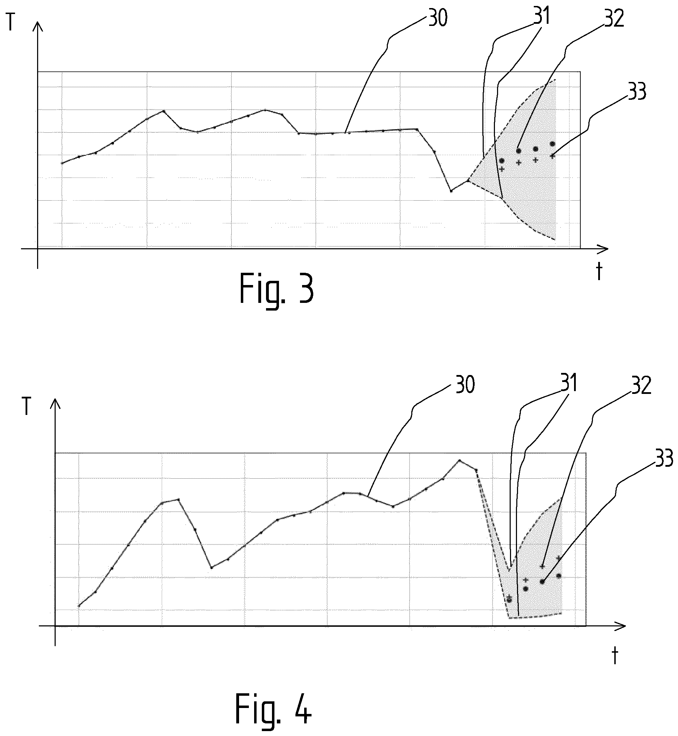

Figure 3 depicts a prediction result for the hot metal temperature T vs. time t of a blast furnace. Figure 3 shows historical values of a selected process variable 30, a real measurement 33 for a current forecasted time range, a prediction results 32. That means, with a 90% probability, the actual values are within a prediction interval 31. So, from the last measured point, the prediction interval leads to a quite wide range where the actual value will be with a 90% probability and compared to the last measured value of the process variable 30, it could either be higher, lower or the same. But as the values could either increase, decrease or stay the same, it is unclear, which action should be suggested by a control system.

In Figure 4 is an example of the data driven model compared with measured values. In this figure a temperature T trend is shown which can be forecasted with high trust, because the prediction interval limits 31 are both below the current temperature value and measured values 33 as well as the prediction 32 are within the prediction interval. In this case, again with a 90% probability, the actual values will be within the prediction interval 31. But in contrary to figure 3, the upper bound and the lower bound give a well-defined drop of the process variable. So, from the last measured value of the process variable 30, the values will drop with a 90% probability. So, the control system should suggest some actions that counteract the expected drop of the process variable.

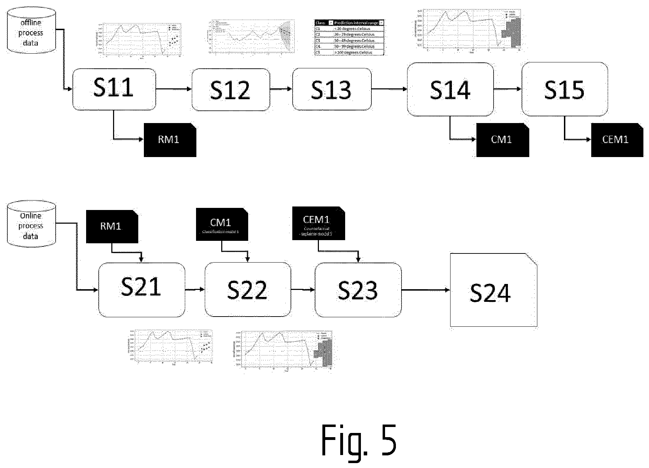

Fig. 5, shows a two-phase approach do determine counterfactual information as transparency information. This two-phase approach is implemented to provide the information about the suggestible process control actions to be taken to reduce the uncertainty of the model predictions. First phase of the approach is done offline and uses historical process data while second phase of the approach is done on-line with the live process data.

First phase of the approach consists of five steps, namely:
- training a regression model,
- estimation of prediction intervals,
- grouping prediction intervals into uncertainty range classes,
- training an uncertainty range classification model and
- generating a counterfactual explainer model.

In the first step S11 of the approach, initial machine learning regression model is trained on historical offline process data of a plant and is used to predict several future values throughout defined prediction horizon interval, e.g., four prediction values for the time points in 30, 60, 90 and 120 minutes. Subsequently in the second step S12, using the regression model, for each of a predicted values in a prediction horizon, prediction intervals are calculated. Prediction intervals present a range of a certain width which cover real model error. In the third step S13, previous domain knowledge and process rules are utilized to group a coverage and a width of these prediction intervals into different prediction range classes. For example, in case of predicting hot metal temperature value, prediction range classes could be <10°C, 11-29°C, 30-50°C etc.

In the fourth step S14, prediction range classes or prediction interval widths can now be used as labels for a classification model trained on the same data as the initial regression model. The prediction range classes are trained based on the prediction intervals and the offline process data. In this step a classifier is outputted which predicts the prediction interval class based on the offline process data. Finally, trained classification model is used as a building block of the counterfactual explainer model in the fifth step. Outputs of the first phase of the approach are regression model RM1, classification model CM1 and counterfactual explainer model CEM1.

In the second phase of the approach previously developed models are deployed in an on-line production scenario and use online production data as an input. Second phase consists of four steps and results in a minimal set of changes of the production parameters, necessary to reduce the uncertainty ranges of the regression model RM1. In the first step S21 of the second phase, online process data is used as an input to the regression model RM1 which outputs several predicted values over specified prediction horizon interval e.g., four prediction values for the time points in 30, 60, 90 and 120 minutes. Subsequently, in the second step S22, prediction a class of prediction intervals are estimated for each of these predictions. In the third step S23, same data used as an input to a regression model is used for classification model which outputs an uncertainty range class for each prediction in the prediction horizon. Finally, in the fourth step S24, same input data and classification model are utilized by the counterfactual explainer model to provide a minimal set of changes necessary to change the output class of the classification model. Namely, change the output class of the classification model to the one representing the smaller uncertainty range i.e. reduce the model uncertainty and make the prediction interval smaller. With this approach in place, both shortterm and long-term prediction uncertainties and set of interventions necessary can be analyzed.

### Reference sign list:

- 1: data driven model
- 1a: predicted process variable
- 1b: reliable information
- 1c: transparency information
- 2: control system
- 3, 3a: input data
- 4: control system outputs
- 6: calculation device
- 10: blast furnace
- 11: actuators
- 12: material input device
- 12a: material data
- 13: measurement devices
- 30: process variable
- 31: prediction interval
- 32: prediction result
- 33: measured value
- S1-S6, S6a, S6b: steps
- S11-15: steps
- S21-24: steps
- t: time
- T: Temperature
- RM1: regression model
- CM1: classification model
- CEM1: counterfactual explainer model

## Claims

1. Method for controlling a process of a metallurgical plant, wherein at least one process variable of a process of the metallurgical plant is predicted by means of a data driven model (1) trained with offline process data of the metallurgical plant, wherein online input data (3), collected during operation, being inputted into the data driven model for the prediction of the at least one process variable, wherein the process variable is used for controlling the process of the metallurgical plant **characterized in, that**
- in a first step input data are verified if the online input data (3) are in a range that was present in the offline process data used for training of the data driven model (1),
if the online input data is present in the offline process data the input data will be forwarded to the data driven model (1), otherwise a warning message will be outputted and the online input data (3) will only be forwarded to the data driven model if an operator or control system (2) allows it to be forwarded,
- in a second step, at least one reliability information of the predicted process variable is calculated and compared with a predefined reliability information
and / or transparency information of the at least one predicted process variable is determined, the transparency information is used to comprehend a result of the predicted process variable to check a reliability of the predicted process variable, wherein the transparency information is compared with a predefined transparency information, wherein the transparency information is determined in such a manner that it is comparable to an empirical value, empirical information and/or empirical data of the process of the metallurgical plant,
- if the comparisons performed in the second step classify the at least one process variable as reliable, the process variable is used as input variable into a control system of the metallurgical plant, otherwise the control system (2) decides how to proceed based on predefined rules.

2. Method for controlling a process of a metallurgical plant according to claim 1 **characterized in, that** the data driven model (1) is designed that the process parameter is predicted by a regression analysis.

3. Method for controlling a process of a metallurgical plant according to claims 1 or 2 **characterized in, that** the data driven model (1) is developed using a method for Cross Industry standard for Data Mining, which consists of the steps:
- Business Understanding
- Data Understanding
- Data Preparation
- Modeling
- Evaluation
- Deployment,
wherein the first step is introduced before the Deployment step and the second step is introduced after the deployment step.

4. Method for controlling a process of a metallurgical plant according to claims 1 - 3 **characterized in, that** the data driven model (1) is designed in such a way that it can predict the process variable for at least 1 minute in advance, preferably at least 1 hour in advance, particular preferably 2 hours.

5. Method for controlling a process of a metallurgical plant according claims 1 - 4 **characterized in, that** the offline process data and the online input data (3) contains at least one of the following data sets:
- material input data
- sensor data form the metallurgical plant
- analysis data from output material
- data from an output event
- calculated data of the metallurgical plant.

6. Method for controlling a process of a metallurgical plant according claims 1 - 5 **characterized in, that** the reliability information is a confidence interval, and the transparency information is determined by anchors and/or a list of most influencing variables on the predicted process variable and/or counterfactual explanations.

7. Method for controlling a process of a metallurgical plant according claims 1 - 6 **characterized in, that** the metallurgical plan is a blast furnace (10), and the process variable is at least a hot metal temperature and/or a hot metal silicon content.

8. Method for controlling a process of a metallurgical plant according claims 1 - 6 **characterized in, that** the metallurgical plan is an iron direct reduction plant, or an iron smelting reduction plant, and the process variable is at least one of a hot metal temperature, metallization, carbon content, iron content or Fe2O3 content

9. Method for controlling a process of a metallurgical plant according claims 1 - 6 **characterized in, that** the metallurgical plan is a sinter or pellet plant, and the process variable is at least a harmonic diameter, a grainsize distribution, a tumbler index, a reduction-degradation index (RDI) or a mechanical strength.

10. Method for controlling a process of a metallurgical plant according claim 1-6 **characterized in, that** the metallurgical plan is a steel plant, and the process variable is at least a temperature, a steel analysis or a slag analysis.

11. Computer system with a memory, wherein a data driven model (1) trained with offline process data of an metallurgical plant is stored in the memory and the data driven model (1) can predict at least one process variable of the metallurgical plant, wherein the data driven model was trained with offline process data of the metallurgical plant and the computer system has input ports for online input data (3) which are fed to the data driven online model, the computer system has also at least one output port for the process variable **characterized in, that**
- in the memory a first computer program is stored, which is programmed in such a way, to verifies in an first step if online input data (3) is in a range that was present in the offline process data used for training of the data driven model and if the online input data (3) is present in the offline process data, which is stored on the memory, the online input data (3) will be forwarded as online input data (3) to the data driven model (1), otherwise a warning message and possibly a verification result will be outputted to an verification output port,
- the memory further includes a second computer program which is programmed in such a way
■ to calculate at least one reliability information of the predicted process variable and compared with a predefined reliability information
■ and / or a transparency information of the at least one predicted process variable is determined, the transparency information is used to comprehend a result of the predicted variable to check a reliability of the predicted process variable, wherein the transparency information is compared with a predefined transparency information,
■ wherein the transparency information is determined in such a manner that it is comparable to an empirical value, empirical information and/or empirical data of the process of the metallurgical plant
- the second computer program is also programmed to classify, according to the comparisons carried out, if the process variable is reliable, if the process variable is classified as reliable the process variable is outputted to the output port, otherwise a warning message is generated and outputted to the output port.

12. Computer system with a memory according to claim 11 **characterized in, that** the data driven model (1) is programmed that the process parameter is predicted by a regression analysis.

13. Computer system with a memory according to claims 11 or 12 **characterized in, that** the data driven model (1) is programmed in such a way that it can predict the process variable for at least 1 minute in advance, preferably at least 1 hour in advance, particular preferably 2 hours.

14. Iron making plant, preferably a blast furnace, a direct reduction plant or a smelting reduction plant comprising the computer system according to claim 11 -13, wherein the process variable is at least one of a hot metal temperature, a hot metal silicon content, a harmonic diameter, a grainsize, a tumbler index, a reduction-degradation index (RDI), a Mechanical strength, metallization, carbon content, iron content and Fe2O3 content.

15. Steel making plant, preferably a steelmaking converter plant, electric arc furnace or a ladle furnace comprising the computer system according to claims 11 -13, wherein the process variable is at least one of a hot metal temperature, a steel analysis and / or a slag analysis.
